# EUROPÄISCHE PATENTSCHRIFT

(11) **EP 1 495 832 B1**
(45) Veröffentlichungstag und Bekanntmachung des Hinweises auf die Patenterteilung: **03.05.2006**
(21) Anmeldenummer: 04011606.3
(22) Anmeldetag: 15.05.2004
(51) Int. Cl.: B23P 15/00, E05B 17/00

(54) **Vorrichtung zum Montieren eines Treibstangenbeschlages an einen Flügelrahmen oder Rahmen eines Fensters oder einer Tür**
Device for mounting an espagnolette fitting to a frame member or frame of a window or a door
Dispositif de montage d'une ferrure à crémone à un cadre ou à un vantail d'une porte ou d'une fenêtre

(30) Priorität: 10.07.2003 DE 10331455
(43) Veröffentlichungstag der Anmeldung: 12.01.2005
(73) Patentinhaber: SIEGENIA-AUBI KG, 57234 Wilnsdorf (DE)
(72) Erfinder: Kluge, Christian, 57555 Mudersbach (DE); Zimmermann, Michael, 57072 Siegen (DE)

(56) Entgegenhaltungen:
- EP-A- 1 132 169
- EP-A- 1 232 830
- DE-A- 3 437 092
- DE-A- 4 444 178
- DE-A- 19 933 890

## Beschreibung

Die Erfindung betrifft eine Vorrichtung zum Montieren eines Treibstangenbeschlages an einen Flügelrahmen oder Rahmen eines Fensters oder einer Tür nach dem Oberbegriff des Anspruchs 1.

Derartige Vorrichtung sind bereits bekannt und bestehen aus einem Montagetisch, der bezogen auf die Horizontale oder die Vertikale leicht geneigt ausgeführt ist. Hierauf wird der Flügelrahmen des Fensters oder der Tür zur Montage des Treibstangenbeschlages aufgelegt um mittels mehrerer Spannbacken und einem Anschlag fixiert.

Der Treibstangenbeschlag besteht in der Regel aus mehreren Beschlag-Baueinheiten, die miteinander verbunden werden. Dazu sind die Beschlag-Baueinheiten entweder mit Kopplungsgliedern versehen, welche längenanpassbar sind oder mit starren Kopplungsgliedern ausgestattet. Die Kopplungsglieder bestehen in der Regel aus Zahnungen, welche an den Schmalseiten einer Treibstange des Beschlag-Baueinheit angeracht ist und in eine komplementäre Zahnung eines Kupplungsschuhs des zu koppelnden Beschlag-Baueinheit einrückbar ist. Die Zahnung der Treibstange ist dabei über einen Teilbereich des Beschlag-Baueinheit ausgeführt, so dass die notwendige Längenanpassung durch Abschneiden an diesem sogenannten Ablängbereich erfolgen kann.

Die aus dem Stand der Technik bekannten Vorrichtungen verwenden dazu entweder Stanzen oder Scheren, in welche die Beschlag-Baueinheit zumindest teilweise einführbar ist. In der DE 199 33 890 A1 ist eine derartige Stanze beschrieben. Zur Maßermittlung der ablängbaren Beschlag-Baueinheit ist es bekannt, die Stanze zusammen mit einem Anschlag des Montagetisches zu verfahren, während eine Spannbacke oder Taster einen weiteren Anschlag mit sich führt an den die Beschlag-Baueinheit angelegt werden kann. Fahren der Anschlag des Montagetisches und die Spannbacke zusammen, so stellt sich zwischen diesen ein Abstand ein, welcher der Breite oder Höhe des Flügelrahmens entspricht. Unter Berücksichtigung fester Abzugsmaße kann aus diesem Abstand unmittelbar die Länge des benötigten Bauteils ermittelt werden. Dies ist beispielsweise aus der DE 34 37 092 A1 bekannt. Durch verschiedene Anschläge, die der Beschlag-Baueinheit angepasst werden, können dabei auch unterschiedliche Einbausituationen bewältigt werden.

Es ist aber auch bereist bekannt, durch Messwertgeber die notwendige Länge des Bauteils zu bestimmen und diese an einen speziell eingerichteten Arbeitsplatz zu übertragen. Die Bemessung der notwendigen Länge des Bauteils wird dort ggf. automatisch mittels entsprechender Antriebseinrichtungen eingestellt und die Beschlag-Baueinheit kann eingelegt und abgelängt werden.

Die vorbeschriebene Bemessung der erforderlichen Länge der Beschlag-Baueinheit wird als Gutteilmessung bezeichnet, da die tatsächlich benötigte Länge des erforderlichen Bauteils eingestellt wird. Nachteilig bei der Gutteilmessung ist es, dass die Handhabung des Treibstangenbauteils mit zunehmender Länge problematisch wird. Die Enden der Beschlag-Baueinheiten müssen in die Aufnahmen der Scheren oder Stanzen eingeführt werden, was bei sehr langen Beschlag-Baueinheiten sehr aufwendig ist.

Daher haben sich in der Praxis Einrichtungen bewährt, welche rechnerisch die Länge ermitteln, die an der Beschlag-Baueinheit abgeschnitten werden muss, was als Schrottmessung bezeichnet wird. Dazu werden Rechner eingesetzt, welche die Gesamtlänge der Beschlag-Baueinheiten gespeichert haben. Ist mittels der bekannten Mittel die Maßermittlung erfolgt, errechnet der Rechner das Maß, um welches die gewählte Beschlag-Baueinheit die notwendige Länge übersteigt und richtet entsprechend den Anschlag und die Schere bzw. Stanze entsprechend aus. Hierzu ist es natürlich notwendig, dass die entsprechenden Maße der verschiedenen Beschlag-Baueinheiten vorrätig gehalten werden und dass Änderungen hieran umgehend eingepflegt werden. Dies ist aber allein aufgrund des Einlaufs der ggf. geänderten Beschlagteile sehr schwer steuerbar, da neben Beschlag-Baueinheiten alter Bauart auch Beschlag-Baueinheiten neuerer Bauart vorrätig sein könnten.

Alternativ dazu sind Tabellen mit Schiebern gebräuchlich, welche manuell eingestellt werden. Auf den Tabellen sind dazu die verschiedenen möglichen Kombinationen der Beschlag-Baueinheiten angegeben, die mit einander gekoppelt werden können. Jede Kombination dieser Bauteile ist mit einer Skala versehen, welche die Gesamtlänge darstellt. Durch ein Lineal kann auf dieser Skala das gewünschte Maß eingestellt und ein mit dem Lineal verbundener Anschlag entsprechend bewegt werden. Gegen diesen Anschlag kann die Beschlag-Baueinheit geführt werden und der nicht benötigte Abschnitt entfernt werden. Auch hierbei sind die Tabellen stets zu aktualisieren, wenn sich Änderungen an den Beschlags-Baueinheiten ergeben. Durch die Vielzahl der möglichen Kombinationen kann die Tabelle sehr groß und damit sehr unübersichtlich werden. Fehleinstellungen sind dadurch nicht zu vermeiden.

Aufgabe der Erfindung ist es daher, eine Vorrichtung und ein Verfahren anzugeben, welches einfach zu handhaben ist und die Nachteile des Standes der Technik vermeidet.

Die Lösung dieser Aufgabe gelingt durch eine Vorrichtung nach Anspruch 1 sowie ein Verfahren nach Anspruch 8.

Durch die erfindungsgemäße Vorrichtung wird der Aufbau der Vorrichtung vereinfacht, da die notwendigen Gegenlager starr an der Vorrichtung angebracht werden können und somit ein zweites bewegliches Gegenlager oder eine Spannbacke entfällt. Die Schrottmessung vereinfacht die Handhabung der Beschlags-Baueinheiten erheblich, ohne dass die erwähnten Nachteile zutage treten, da die notwendigen Maße entweder mechanisch oder mit den Mitteln zur Maßermittlung unmittelbar und ohne Umrechnung eingestellt bzw. ermittelt werden.

Da der bewegliche Anschlag ausschließlich im Bereich der Länge des Ablängbereichs verfahren werden muss, ergibt sich auch hier eine Vereinfachung allein aufgrund der kurzen Stellwege, die ansonsten zumindest der Hälfte der Flügelabmessungen entsprechen.

Eine Weiterbildung der Vorrichtung sieht vor, dass die Gegenlager aus Zapfen bestehen, welche zur Wirksammachung in entsprechende Ausnehmungen der Vorrichtung einführbar sind. Dadurch ist eine sehr einfache Ausgestaltung der Vorrichtung möglich. Die Ausnehmungen können beispielsweise auf einem Metallstreifen in Form eines Lineals an der Vorrichtung angebracht werden, in welche die Zapfen einsteckbar sind. Dadurch können ggf. auch bereits vorhandene Vorrichtungen einfach um- bzw. nachgerüstet werden.

Alternativ dazu kann vorgesehen werden, dass die Gegenlager aus quer zur Bewegungsrichtung des Anschlags beweglichen Schwenkanschlägen bestehen. Dadurch entfallen ansonsten notwendige manuelle Eingriffe durch eine Bedienperson.

Zweckmäßig ist es, wenn das Mittel zum Durchtrennen der Beschlag-Baueinheit eine Stanze oder Schere ist, da diese Mittel bereits sehr geläufig sind.

Eine besondere Ausgestaltung betrifft eine Vorrichtung, bei der zumindest ein Gegenlager so geformt ist, dass das Gegenlager in einer Bohrung oder Ausnehmung des Flügelrahmens zur Anbringung des Handhebels aufgenommen werden kann. Bei einigen Treibstangenbeschlägen soll ein Antriebs-Baueinheit nämlich so an dem Flügelrahmen angebracht werden, dass der Bedienhebel mittig an dem Flügelrahmen angebracht ist. Dadurch verschiebt sich der Bezugspunkt von einer Flügelkante zu der Bohrung des Bedienhandhebels hin. Durch die Form des Gegenlagers kann die Vorrichtung auch für solche Einsatzfälle verwendet werden.

Ein weiterer Vorteil ergibt sich dadurch, dass die Bewegung des Anschlages oder des Mittels zum Durchtrennen der Beschlag-Baueinheit in einer annähernd lotrechte Richtung erfolgt. Dies wird im wesentlichen durch die Reduzierung der Bewegungswege auf den Ablängbereich des Beschlag-Baueinheit möglich und erleichtert die Handhabung nochmals. Die mitunter sehr langen Beschlag-Baueinheiten können so ohne die Gefahr des Durchbiegens von oben in das Mittel zum Durchtrennen bzw. an den Anschlag herangeführt werden. Die abgetrennten Endstücke lassen sich dabei sehr einfach abführen und sammeln.

Eine dazu geeignete Vorrichtung weist dazu an dem beweglichen Anschlag eine Umlenkvorrichtung auf, welche den Anschlag oder das Mittel zum Durchtrennen und den beweglichen Anschlag antriebsverbindet.

Ein entsprechendes Verfahren zur Bemessung des Beschlag-Baueinheit ist in dem Anspruch 8 angegeben.

Weitere vorteilhafte Ausgestaltungen ergeben sich aus den in den Figuren dargestellten Ausführungsbeispielen. Es zeigt:
- Fig. 1: eine Vorrichtung in Form eines Montagetisches in einer Seitenansicht,
- Fig. 2: den Montagetisch nach Fig. 2 in einer Draufsicht,
- Fig. 3.1: die schematisierte Rückansicht eines in herkömmlicher Weise aus Profilholmen zusammengebauten Flügelrahmens für ein Fenster oder eine Tür mit den seiner Bedienungsseite zuzuordnenden Beschlags- Baueinheiten eines Treibstangenbeschlages vor ihrem Anschlag bzw. ihrer Montage am Flügelrahmen, die
- Fig. 3.2 und 3.3: die Anschlags- bzw. Montage-Reihenfolge der drei Beschlags-Baueinheiten, nämlich einer Antriebs-Baueinheit und zweier Eckbeschlags-Baueinheiten an diesem Flügelrahmen,
- Fig. 4: in größerem Maßstab Einzelheiten der Beschlags-Baueinheiten des zum Einsatz gelangenden Treibstangenbeschlages,
- Fig. 5 und 6: eine Verwendung der Vorrichtung bei einem Flügelrahmen, dessen Treibstangenantrieb mittig angebracht werden soll,
- Fig. 7 und 8: die Verwendung der Vorrichtung bei Bemessung des Beschlag-Baueinheit an einem zweiten Flügelholm,
- Fig. 9 und 10: die Verwendung der Vorrichtung bei einem Flügelrahmen, dessen Treibstangenantrieb konstant zu einer seiner Längsenden angebracht werden soll und
- Fig. 11: eine detaillierte Darstellung der Mittel zum Ablängen.

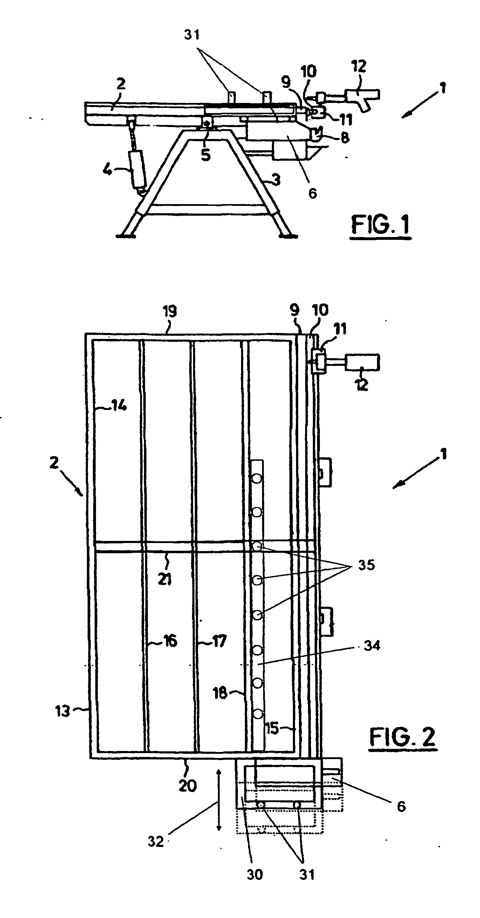

In der Fig. 1 ist die Vorrichtung als Montagetisch 1 von der Seite dargestellt. Der Montagetisch 1 weist eine Tischplatte 2 und ein Trägergestell 3 auf. Die Tischplatte 2 kann mit Hilfe einer pneumatischen Einrichtung 4 um einen Drehpunkt 5 relativ zu dem Trägergestell 3 gekippt werden. Unterhalb der Tischplatte 2 sind eine pneumatisch betriebene Schere 6 erkennbar.

Im dargestellten Ausführungsbeispiel ist das schematisch dargestellte Scherenmaul 8 der Schere 6 nach oben gerichtet. An der Vorderkante 9 der Tischplatte 2 ist eine Führungsschiene 10 mit einem Träger 11 angebracht, an der ein Schrauber 12 zum Anbringen der Befestigungsschrauben oder eine Bohrmaschine befestigt ist.

In der Draufsicht der Vorrichtung nach Fig. 2 wird deutlich, dass die Tischplatte 2 aus einem Rahmen 13 besteht, der parallel zu seiner längeren Seiten 14, 15 Verbindungsstreben 16,17,18 aufweist, während parallel zu den kürzeren Seiten 19,20 und in der Mitte zwischen diesen eine Querstrebe 21 vorgesehen ist.

An der Seite 20 ist ein verschiebbarer Ansatz 30 vorgesehen, an dem zum einen die Schere 6 und zum anderen mindestens ein über die Tischplatte 2 vorstehender Anschlag 31 vorgesehen ist. Der Ansatz 30 ist gegenüber der Tischplatte 2 entlang des Doppelpfeils 32 verschiebbar. Dies kann manuell oder mittels eines beispielsweise pneumatisch angetriebenen Stellglieds erfolgen.

An dem Montagetisch 1 ist ferner ein Lineal 33 vorgesehen, welches Bohrungen 35 aufweist, die in regelmäßigen Abständen an dem Lineal 33 angeordnet sind.

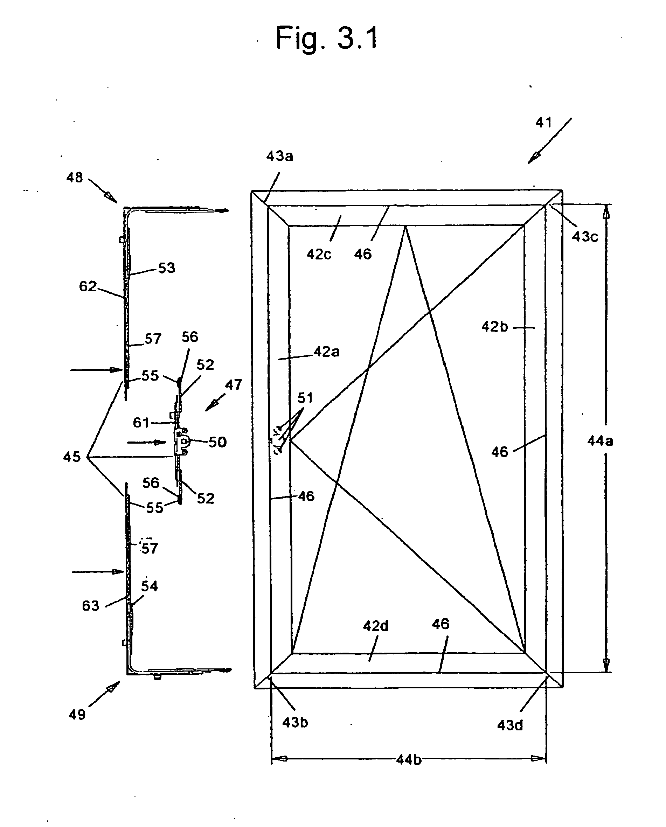

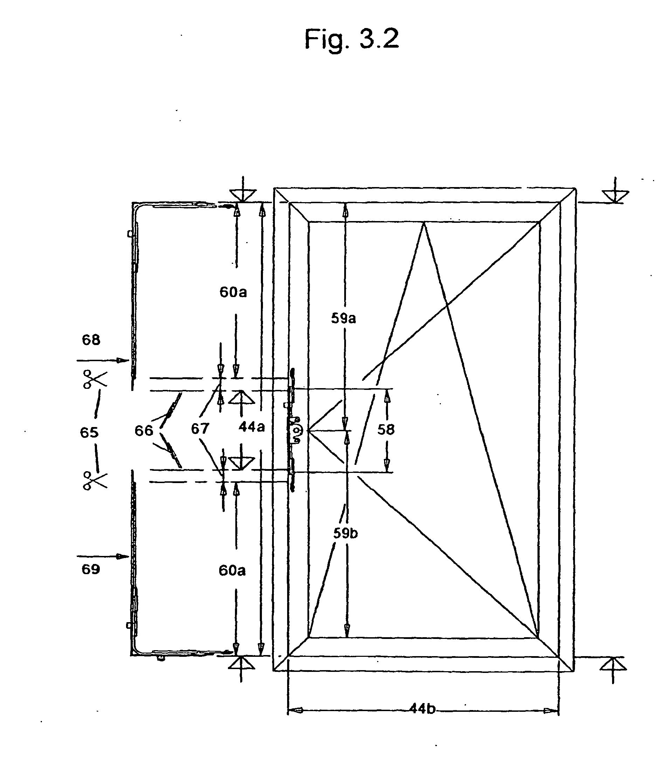

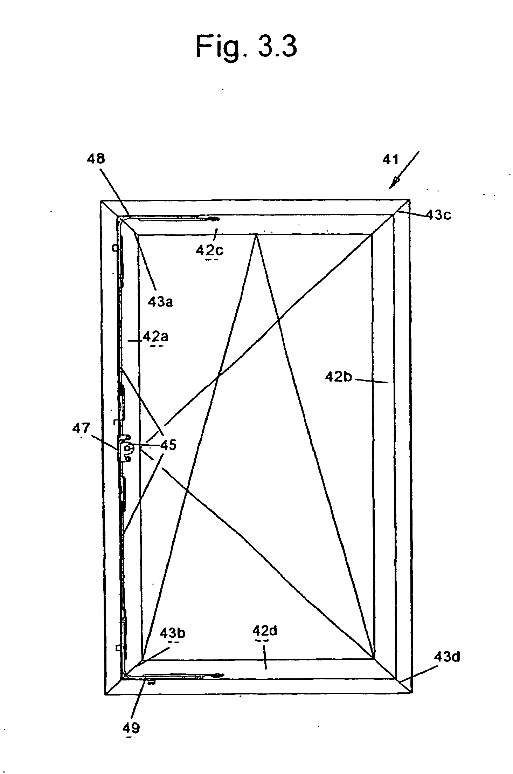

In den Fig. 3.1., 3.2 und 3.3 der Zeichnung ist ein Flügelrahmen 41 zu sehen, welcher zusammen mit einem (nicht gezeigten) Blendrahmen die wesentlichen Bestandteile für ein Fenster oder eine Tür bildet. Erstellt wird der Flügelrahmen 41 aus vier sich jeweils im rechten Winkel zueinander erstreckenden Profilholmen 42a, 42b, 42c, 42d, indem deren einander zugewendete Enden jeweils durch sogenannte Eckverbindungen 43a, 43b, 43c, und 43d starr zusammengeschlossen werden. Beim gezeigten Ausführungsbeispiel sind dabei die Eckverbindungen 43a bzw. 43d als Gehrungs-Eckverbindungen ausgeführt. Es ist aber durchaus möglich, die Profilholme 42a bis 42d auch durch andersartige Eckverbindungen 43a bis 43d starr miteinander zum Flügelrahmen 41 zu verbinden. Die Profilholme 42a bis 42d zur Bildung des Flügelrahmens 41 können aus Holz, Kunststoffmaterial oder auch Metall bestehen, wobei sich insbesondere bei der Verwendung von Holzprofilen Eckverbindungen bewährt haben, die keine Gehrungen aufweisen. Es ist aber auch möglich und in manchen Fällen besonders vorteilhaft, sie als sogenannte Verbund-Elemente aus mehreren verschiedenen Materialien vorzufertigen.

Seit langem ist es allgemein üblich, die Flügelrahmen 41 für Fenster oder Türen in der jeweils gewünschten oder erforderlichen Größe, also mit sehr unterschiedlicher Flügelfalzhöhe 44a und Flügelfalzbreite 44b vollständig fertig zu stellen, bevor diese dann mit den für ihre jeweilige Funktion zusätzlich notwendigen Beschläge ausgestattet sowie über diese mit dem zugehörigen Blendrahmen bzw. dessen Beschlägen in Wirkverbindung gebracht werden. Allerdings kann abweichend davon auch vorgesehen werden, dass die Beschläge bereits an den losen und noch nicht zusammengefügten Holmen befestigt werden. Die Holme 42 a bis 42d lassen naturgemäß leichter handhaben als der fertig erstellte Flügelrahmen.

Den Beschlägen kommt dabei die Aufgabe zu, die ordnungsgemäßen Offnungs- und Schließfunktionen des Fensters oder der Tür zu gewährleisten. Sie müssen dabei nicht nur unterschiedliche Bewegungsmöglichkeiten des Flügelrahmens 41 relativ zum Blendrahmen sicherstellen. Vielmehr müssen zwischen Flügelrahmen 41 und Blendrahmen auch noch Treibstangenbeschläge 45 eingebaut und wirksam gemacht werden, welche nicht nur der Einstellung der unterschiedlichen Bewegungsmöglichkeiten des Flügelrahmens 41 relativ zum Blendrahmen dienlich sind, sondern darüber hinaus auch eine Verriegelung des in Schließstellung am Blendrahmen anliegenden Flügelrahmens 41 sicherstellen sollen.

Zumindest an der sogenannten Bedienungsseite des Flügelrahmens 41, welche beim Ausführungsbeispiel nach den Fig. 3.1 bis 3.3 von dem durch die beiden Eckverbindungen 43a und 43b begrenzten Profilholm 42a bestimmt wird, ist daher der Einbau eines Treibstangenbeschlages 45 entlang der Falzumfangsfläche 46 des Flügelrahmens 41 erforderlich. Die für den Einbau des Treibstangenbeschlages 45 vorgesehene Profilierung der Falzumfangsfläche 46 ist - vorzugsweise - in Längsrichtung aller den Flügelrahmen 41 bildenden Profilholme 42a bis 42d gleich. Bei jeweiligem Bedarf können daher nicht nur der Bedienungsseite des Flügelrahmens 41, also dem in seiner Länge von den Eckverbindungen 43a und 43d begrenzten Profilholm 42a sondern auch allen weiteren Profilholmen 42b, 42c und 42d desselben sogenannte Anschluss-Baueinheiten (in den Fig. 3.1 bis 3.3 nicht gezeigt) des Treibstangenbeschlages 45 zugeordnet werden.

In den Fig. 3.1 bis 3.3 der Zeichnung ist lediglich zu sehen, dass der der Bedienungsseite des Flügelrahmens 41 zuzuordnende bzw. zugeordnete Treibstangenbeschlag 45 von drei miteinander bewegungsmäßig zu kuppelnden Beschlags-Baueinheiten 47, 48 und 49 gebildet werden soll oder kann. Von diesen Beschlags-Baueinheiten 47, 48 und 49 sind die Beschlags-Baueinheiten 48 und 49 als sogenannte Eckbeschlags-Baueinheiten ausgelegt, deren jede sich im Bereich einer Eckverbindung 43a bzw. 43b der Bedienungsseite des Flügelrahmens 41 an der Falzumfangsfläche 46 ausrichten und befestigen lässt, wie das Fig. 3.3 der Zeichnung erkennen lässt.

Die zwischen den beiden Eckbeschlags-Baueinheiten 48 und 49 anzuordnende mittlere Beschlags-Baueinheit 47 ist als eine sogenannte Antriebs-Baueinheit ausgeführt, die den Stellantrieb 50 für den gesamten Treibstangenbeschlag 45 trägt, welcher z.B. durch eine Betätigungshandhabe manuell bewegbar ist.

Während die Beschlags-Baueinheiten 47, 48 und 49 an sich in der längs der Falzumfangsfläche 46 der Profilholme 42, 42c und 42d vorgesehenen Stufen- bzw. Profilnut - der sogenannten EURONUT - aufgenommen und befestigt werden können, muss der an der Bedienungsseite des Flügelrahmens 41 gelegene Profilholm 42a zusätzlich mit Ausnehmungen 51 versehen werden, welche an die Stufen- bzw. Profilnut anschließen und den Stellantrieb 50 der als Antriebs-Baueinheit dienenden Beschlags-Baueinheit 47 aufnehmen können.

Wesentliches Kriterium zumindest des der Bedienungsseite des Flügelrahmens 41 zuzuordnenden Treibstangenbeschlages 45 ist, dass sich die wirksame Gesamtlänge aller drei miteinander bewegungsmäßig zu kuppelnden Beschlags-Baueinheiten 47, 48 und 49 problemlos und feinstufig auf völlig unterschiedliche Längenabmessungen der Bedienungsseite des Flügelrahmens 41 - im Beispiel also an völlig unterschiedliche Flügelfalzhöhen 44a - abstimmen lässt. Hierzu sind besondere Vorkehrungen an den drei miteinander bewegungsmäßig zu kuppelnden Beschlags-Baueinheiten 4, 48 und 49 - d.h. sowohl an der Antriebs-Baueinheit 47 als auch an den beiden Eckbeschlags-Baueinheiten 48 und 9 - notwendig. Es werden nämlich zumindest zwischen den einander zugewendeten Enden der jeweils zu den Beschlags-Baueinheiten 47, 48 und 49 gehörenden Treibstangen 52, 53 und 54 besondere Kupplungselement-Paarungen 65 vorgesehen. Von diesen benutzt jede zwei feinstufig verstellbar miteinander in sich gegenseitig überlappenden Formschlußeingriff bringbare sowie dabei in Bewegungsrichtung zug- und drucksteife Kupplungselemente, die weiter unten bezüglich ihrer Anordnung und Ausbildung noch ausführlicher erläutert werden. Bevorzugt wird dabei die Benutzung von unmittelbar ineinandergreifenden Feinverzahnungen, welche als Kupplungselement-Paarungen zumindest zwischen den Treibstangen von Treibstangenbeschlägen schon bekannt sind.

An beiden Enden der Treibstange 52 der beispielsweise die Antriebs-Baueinheit bildenden mittleren Beschlags-Baueinheit 47 ist je ein die wirksame bzw. vorgegebene - ständig gleichbleibende - Formschlußeingriffs-Länge bestimmendes - kurzes - Kupplungselement 56 ausgebildet, während sich an der unmittelbar einen integrierten Bestandteil jeder Eckbeschlags-Baueinheit 48 oder 49 bildenden Treibstange 53 oder 54 das die mögliche Verstell-Länge bestimmende - lange - Kupplungselement 57 für eine Kupplungselement-Paarung 55 befindet.

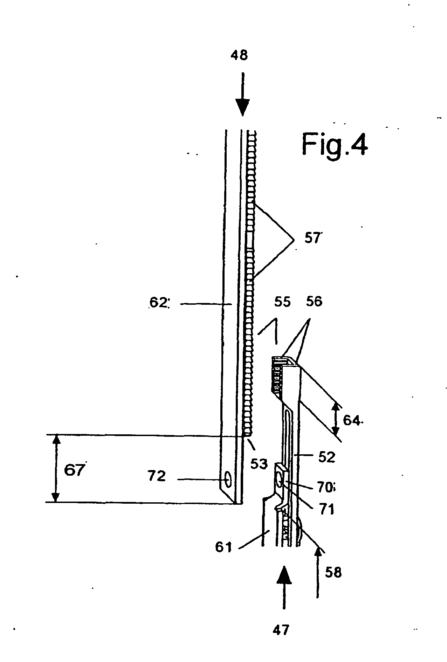

Bei jedem Kupplungselement 46 handelt es sich vorzugsweise - wie Fig. 4 erkennbar macht - um einen im Querschnitt im wesentlichen U-förmig profilierten Kupplunasschuh, der wenigstens an der Innenseite eines seiner U-Schenkel eine Feinverzahnung trägt, die mit ihrem Zahnprofil quer zur Längsrichtung dieses Schenkels ausgerichtet ist. Bei dem Kupplungselement 47 handelt es sich bevorzugt - wie ebenfalls aus Fig. 4 ersichtlich ist - um eine in ihrem Querschnitt flach rechteckig profilierte Treibstange, welche mindestens an einer ihrer Schmalseiten über einen relativ großen Längenabschnitt hinweg mit einer komplementären Feinverzahnung versehen ist, deren Zahnprofil sich quer zur Längsrichtung der betreffenden Schmalseite erstreckt.

Bei dem in der Zeichnung dargestellten Ausführungsbeispiel für den der Bedienungsseite des Flügelrahmens 41 zuzuordnenden Treibstangenbeschlag 45 weist jede der drei Beschlags-Baueinheiten 47, 48 und 49 außer ihrer Treibstange 52, 53 oder 54 noch eine sich parallel dazu erstreckende Stulpschiene 61, 62 oder 63 auf. Für die Stulpschiene 61 an der die Antriebs-Baueinheit bildenden mittleren Beschlags-Baueinheit 67 ist die Länge auf ein exaktes Nennmaß 58 festgelegt. Dieses wird von der die Kupplungselemente 56 tragenden Treibstange 52 beidendig mehr als um die Formschlusseingriffs-Länge 64 des dort befindlichen Kupplungselementes 56 überragt. An jeder der beiden Eckbeschlags-Baueinheiten 48 und 49 ist wenigstens die der mit dem Kupplungselement 57 ausgestatteten Treibstange 53 bzw. 54 zugeordnete Stulpschiene 62 bzw. 63 an ihrem freien Ende in ihrer Längenabmessung - durch entsprechendes Abtrennen - kürzbar vorgesehen. Eine entsprechend kürzbare Ausgestaltung hat aber auch das die mögliche Verstell-Länge bestimmende - lange - Kupplungselement 57 der Treibstange 53 bis 54 an ihrem freien Ende. Es lässt sich also ebenfalls - durch Abtrennen - an seinem freien Ende im Bereich des sogenannten Ablängbereichs 57' bedarfsweise kürzen. Der Ablängbereich 57'erstreckt sich über eine Teillänge der Beschlags-Baueinheiten 48 und 49.

Die Kürzbarkeit der Stulpschiene 62 bzw. 63 und des Kupplungselementes 57 der Treibstange 53 bzw. 54 an den Eckbeschlags-Baueinheiten 48 und 49 ist in Fig. 3.2 der Zeichnung jeweils durch Scheren-Symbole 65 und zu diesen schräg gestellt gezeigte Trennabschnitte 66 kenntlich gemacht. Abweichend von der Darstellung können die Eckbeschlags-Baueinheiten 48 und 49 auch an den orthogonal verlaufenden Treibstangen mit einem Ablängbereich 57' versehen sein Die entlang der Profilholme 42c und 42d verlaufenden Treibstangen 57" sind dann ebenfalls mit einem langen Kupplungselement 57 (Fig. 4) versehen.

In der Praxis werden prinzipiell zwei Anwendüngsfälle unterschieden: Zum einen kann vorgesehen werden, dass die Ausnehmungen 51 und damit die Betätigungshandhabe mittig auf dem Profilholm 42a angebracht wird. Dabei ist der Sitz 59a des Stellantriebs 50 identisch mit dem Sitz 59b (Fig. 3.2). Dieser Anwendungsfall wird als mittiger Griffsitz bezeichnet. Zum anderen kann vorgesehen werden, dass die Betätigungshandhabe einen festen Abstand von der unteren Flügelfalzfläche haben soll. Dabei ist der Sitz 59b konstant für mehrere Fenster während der Sitz 59a bei unterschiedlichen Flügelabmessungen variieren kann. Dabei wird von einem festen Griffsitz gesprochen.

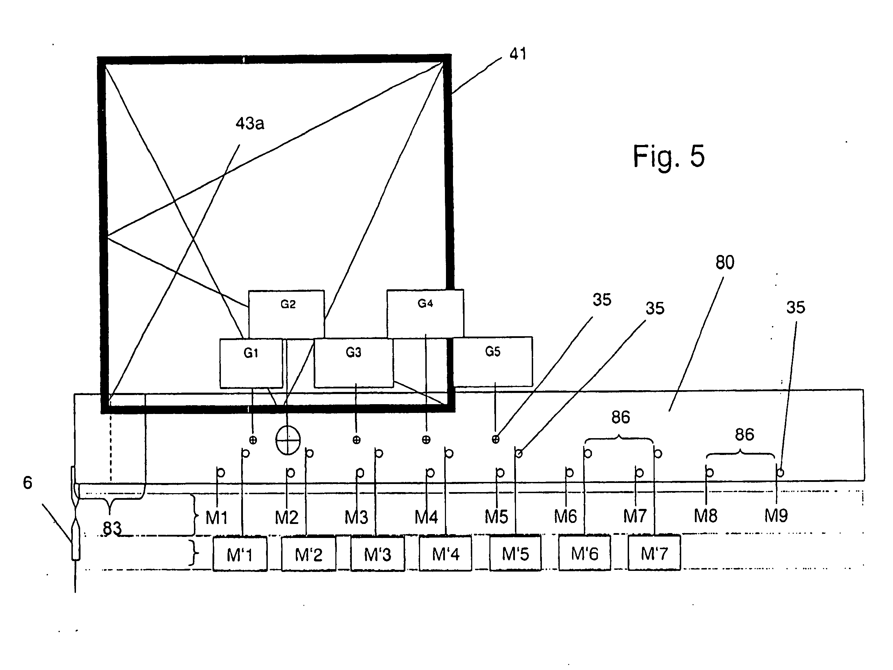

Die Vorrichtung dient vornehmlich der Montage des vorbeschriebenen Beschlages an dem Flügelrahmen 41, der dazu auf die Tischplatte 2 aufgelegt wird, wie in der Fig. 5 schematisch dargestellt. Das Lineal 33 weist im Ausführungsbeispiel drei Skalen 80, 81 und 82 auf, die verschiedenen Anwendungen zugeordnet werden. Die Skala 80 beispielsweise dient dem vorstehend erwähnten Einsatz bei einem mittigen Griffsitz, der nachstehend detailliert beschrieben wird.

Um an dem Flügelrahmen 41 die Beschläge anzubringen wird dieser mit der Eckverbindung 43a in dem Bereich 83 angelegt. Der Bereich 83 bildet den Verschiebebereich des Ansatzes 30 bzw. des Anschlags 31, der zunächst in seine Ausgangslage verschoben wird, in der der Bereich 83 vollständig frei ist. Der Eckbereich 43a muss dabei nicht an den Anschlag 31 herangeführt werden, sondern der Flügelrahmen 41 ist nur so auf der Tischplatte 2 anzuordnen, dass der Eckbereich 43a im Bewegungsraum des zunächst maximal zurückgezogenen Ansatzes 30 liegt. Die Ausnehmungen 51 sind zum Zeitpunkt der Montage der Beschläge bereits an dem Flügelrahmen 41 angebracht, so dass für die Bedienperson erkennbar ist, welche Bohrung 35 im Bereich der Ausnehmungen 51 bzw. in der Zeichnung rechts davon liegt. Die Bohrung 35 kennzeichnen die möglichen Griffpositionen G1 bis G5, die in Abhängigkeit der verschiedenen Antriebsbaueinheiten 47 voneinander beabstandet sind. Im dargestellten Ausführungsbeispiel ist die mit G2 gekennzeichnete und hervorgehobene Bohrung 35 die nächste verfügbare Bohrung.

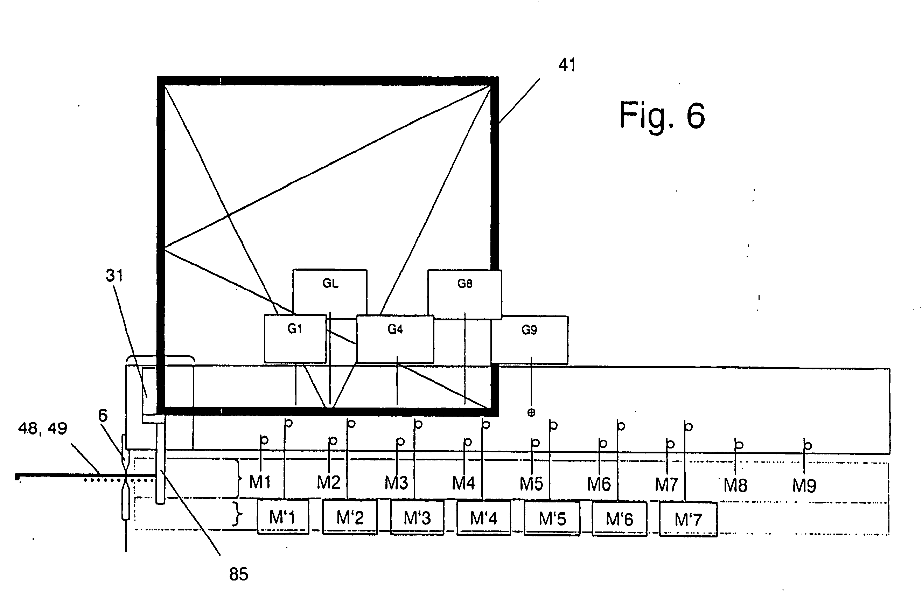

Eine hier nicht näher dargestellte Aufnahme wird in die mit G2 markierte Bohrung 35 eingesetzt, welche dabei auch in die Ausnehmungen 51 eingeführt wird. Dadurch ist der Flügelrahmen 41 entlang des Profilholms 42a festgelegt. Der Flügelrahmen 41 wird dadurch in der Zeichnung nach rechts verschoben und nimmt die in der Fig. 6 dargestellte Lage ein. Hier wird nun - manuell oder mittels eines Stellantriebs - der Anschlag 31 gegen die Flügelrahmenaussenkante verfahren. Der Flügelrahmen 41 ist nun über den Anschlag 31 und die Bohrung 35 festgelegt. Die Bohrung 35 bzw. die darin aufgenommene Aufnahme bildet somit ein wirksames starres Gegenlager (GL) für den beweglichen Anschlag 31. Die Aufnahme besteht im einfachsten Falle aus einem mehrfach abgesetztem Zapfen, der einenends in die Bohrung 35 einführbar ist und anderenends in die Ausnehmungen 51 möglichst spielfrei eintauchen kann.

An dem Montagetisch 1 ist starr die Schere 6 befestigt, welche das Mittel zum Durchtrennen der Beschlags-Baueinheiten 48, 49 entlang des Anlängbereichs 57' bildet. An dem Ansatz 30 ist ein zusammen mit diesem verschiebbarer Anschlag 85 vorgesehen, gegen den die Beschlags-Baueinheit 48 oder 49 anstoßen kann. Es ist leicht ersichtlich, dass der Abstand des Anschlags 85 von der Schere 6 und damit die Trennabschnitte 66 um so größer werden, je kleiner der Flügelrahmen 41 ist. Die Bemessung der Trennabschnitte 66 erfolgt dabei unmittelbar durch Einstellen der Anschläge 31 und - damit verbunden - 85.

Es ist leicht erkennbar, dass der Abstand 86 der Bohrungen 35 zueinander auf jeder Skala den Ablängbereich 57' entsprechen muss, da mit jedem Erreichen des nächsten Abstandes bzw. der nächsten Bohrung eine nächst größere Beschlags-Baueinheiten 48, 49 notwendig wird.

Erfolgt der Anschlag mit mittigem Griffsitz kann das Ablängen beider Beschlags-Baueinheiten 48 und 49 in der in Fig. 6 dargestellten Weise erfolgen, da die jeweils andere Beschlags-Baueinheiten 48 oder 49 identische Abmessungen aufweisen muss.

Es ist aber abweichend von der Darstellung nach Fig. 5 und 6 aber auch möglich, dass die Schere 6 zusammen mit dem Anschlag 31 bzw. dem Ansatz 30 verfahren wird und der Anschlag 85 ortsfest an dem Montagetisch 1 angeordnet ist. In beiden Fällen ist der Versatz zwischen dem Anschlag 31 und dem Anschlag 85 durch Besonderheiten des verwendeten Profilssystems begründet und auf dieses abzustimmen.

Das Mitführen der Schere 6 zusammen mit dem bzw. an dem Ansatz 30 ist aber aufwendiger, das die Schere 6 oftmals als hydraulisch oder pneumatisch angetriebene Stanze ausgebildet ist. Neben dem Antrieb an sich ist dabei auch das Werkzeug mitzuführen, auf welches der Antrieb einwirkt. Beispiele für derartige Werkzeuge sind etwa aus der DE 199 33 890 A1 bekannt. Die zu bewegende Masse ist daher nicht zu vernachlässigen und bringt neben dem Problem des Antriebs auch das Problem der beweglichen Lagerung mit sich.

Die Ausgestaltung des Gegenlagers GL als Zapfen, der in eine Bohrung 35 eingeschoben ist dabei eine einfache und zugleich wirksame Möglichkeit zur Wirksammachung des entsprechenden Gegenlagers GL. Es kann aber auch vorgesehen werden, dass die Gegenlager GL durch Schwenkanschläge gebildet werden, die um eine Achse schwenkbar sind, die parallel zur Verbindungsstrebe 18 (Fig. 1) verläuft. Der Flügelrahmen 41 kann dadurch parallel zu der Querstrebe 21 verschoben werden und alle das Gegenlager GL bleibt wirksam, welches außerhalb des Flügelrahmen 41 liegt. Dieses sperrt dann aufgrund seiner Aufhängung den Flügelrahmen 41 an einer Verlagerung parallel zur Verbindungsstrebe 18.

Die Montage der Beschlags-Baueinheiten 47, 48 und 49 erfolgt in der Reihenfolge, dass zunächst die Beschlags-Baueinheiten 47 - also die Antriebsbaueinheit - montiert wird. Anschließend werden die Eckbeschlags-Baueinheiten 48 und 49 abgelängt, antriebsverbunden und befestigt. Sollen an den Profilholmen 42c und 42 d weitere Beschlags-Baueinheiten angebracht werden, so sind die Eckumlenkungs-Baueinheiten 48, 49 - wie vorstehend bereits erwähnt - auf den den Profilholmen 42c und 42d zugeordneten Treibstangen mit langen Kupplungselemente 57 ausgestattet und werden erst montiert, wenn alle übrigen Beschlags-Baueinheiten bereits angebracht wurden.

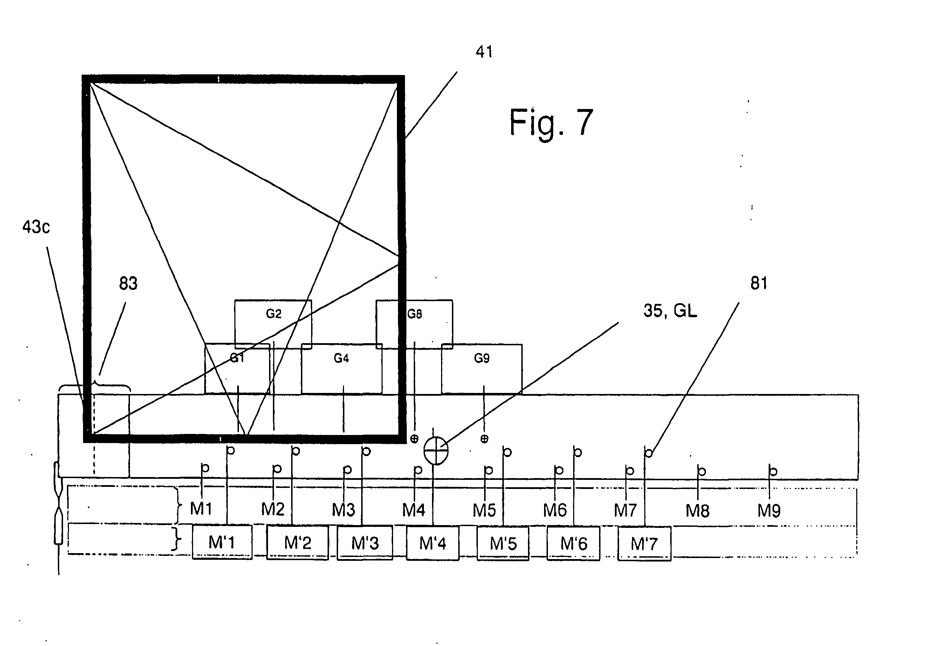

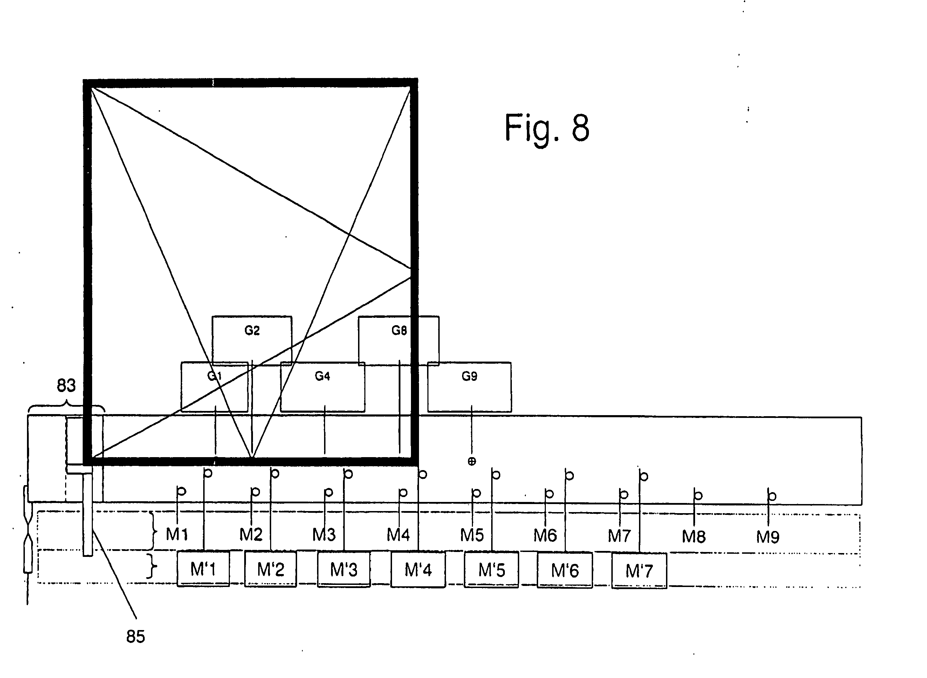

In den Fign. 7 und 8 wird das weitere Vorgehen des Anschlags des Beschlages für den Flügelrahmen 41 dargestellt. Nachdem die Antriebs-Baueinheit 47 montiert und die Beschlags-Baueinheiten 47, 48 abgelängt wurden, wird der Flügelrahmen 41 um 90° gedreht. Die Eckverbindung 43c wird nun in dem Bereich 83 verschoben. Manuell oder mittels des Schwenkanschlages ergibt sich das notwendige Gegenlager GL an der für die zu montierende Beschlags-Baueinheit an der Stelle M'4 an der Skala 81, welche für eine Ausstellvorrichtung o.ä. vorgesehen ist. Nachdem dieses wirksam gemacht wurde, kann der Ansatz 30 zum Festlegen des Flügelrahmens 41 verschoben werden. Mit diesem wird auch der Anschlag 85 eingestellt, so dass sich zwischen der Schere 6 und dem Anschlag 85 unmittelbar das Maß ergibt, welches von der Baubeschlags-Baueinheit 48, 49 abgetrennt werden muss.

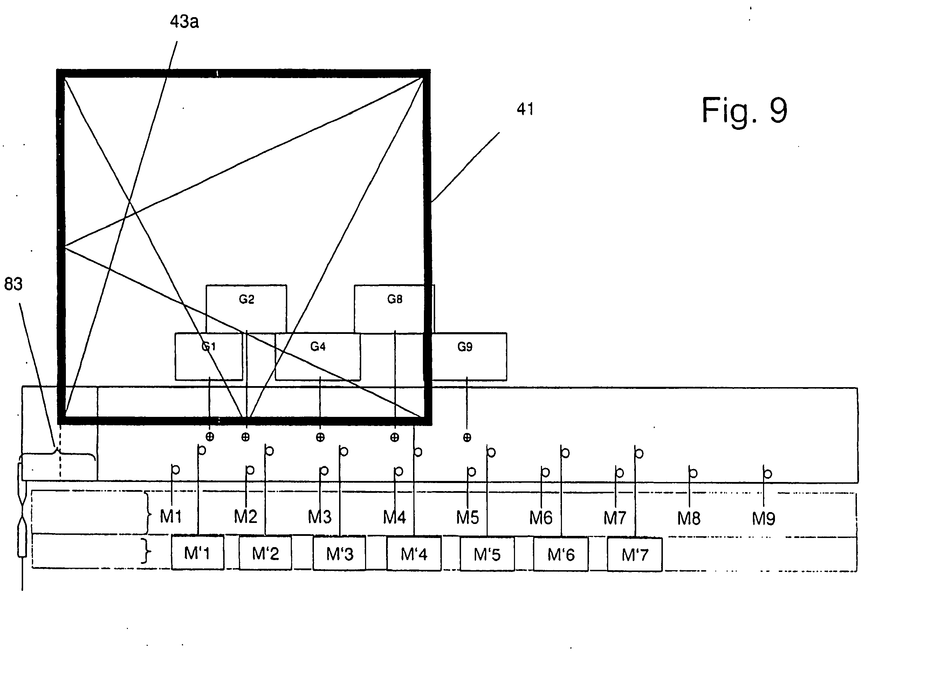

Im Gegensatz zur Bestimmung des wirksamen Gegenlagers GL nach dem zuletzt geschilderten Vorgehen wird der Flügelrahmen 41 bei diesem Vorgehen also an den Außenkanten und nicht an den Ausnehmungen 51 gehalten. Damit entspricht diese Methode weitgehend dem Verfahren, welches bei einem festen Griffsitz auch an dem Profilholm 42a angewendet wird und im Folgenden anhand der Fig. 9 erläutert wird.

Bei dem festen Griffsitz ist die Beschlags-Baueinheit 47 (bzw. die Antriebs-Baueinheit 47) und die untere Beschlags-Baueinheit 49 entweder baueinheitlich, also einteilig, ausgeführt oder mit einer Kupplungselement-Paarung 55 versehen, die keinen oder einen nur geringen Längenausgleich zulässt. Daher ist die Notwendigkeit zu Anpassung auf die Beschlags-Baueinheit 48 beschränkt. Zur Bemessung und Montage dieser wird der Flügelrahmen 41 mit der Eckverbindung 43a in den Bereich 83 gelegt. Das wirksame Gegenlager GL wird für diese Anwendung und Einsatzfall auf der Skala 82 bestimmt. Der Anwender erkennt in der Ausgangslage des Ansatzes 30/Anschlags 31, also bei völlig zurückgezogenem Anschlag 31 bzw. Ansatz 30, dass entweder der Zapfen bei M4 in die Bohrung 35 eingesteckt werden muss, bzw. dass die Eckverbindung 43a nicht mehr im Bereich 83 liegt, wenn dass Gegenlager GL bei M5 wirksam wird.

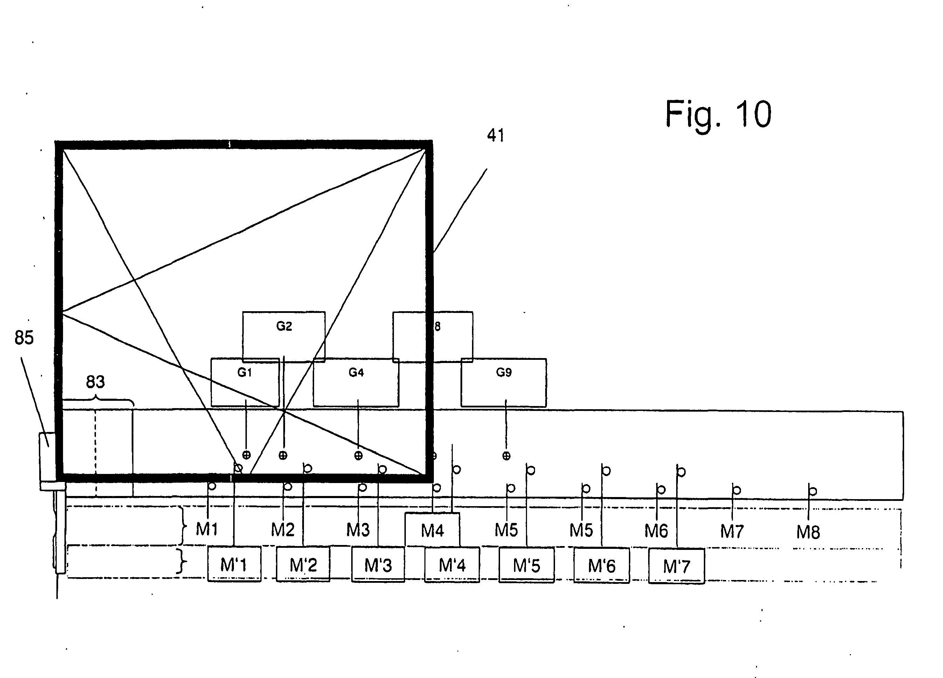

Dementsprechend kann der Flügelrahmen 41 bei vollständig zurückgezogenem Anschlag 31 nahezu spielfrei zwischen den Anschlag 31 und das bei M4 wirksame Gegenlager GL festgelegt werden, da im dargestellten Ausführungsbeispiel die Flügelfalzhöhe 44a (Fig. 3.1) so gewählt ist, dass die die Beschlags-Baueinheit 48 nicht abgelängt werden muss. Entsprechend der Fig. 10 ergibt sich nämlich bei diesen Abmessungen. dass der Anschlag 85 und die Schere 6 nahezu keinen Abstand zueinander aufweisen. Die Beschlags-Baueinheit 48 kann daher ohne abgelängt zu werden montiert werden.

In den dargestellten Ausführungsbeispielen ist die Schere 6 und der Anschlag 85 jeweils Bestandteil der Vorrichtung bzw. des Montagetisches 1. Es kann aber unabhängig davon vorgesehen werden, dass an dem Ansatz 30 ein Messgeber vorgesehen ist, welcher bei einer entsprechenden Einstellung dass aufgefundene Maß an eine von der Vorrichtung (Montagetisch 1) unabhängige Einrichtung weiterleitet. Diese Einrichtung berechnet daraus eine Stellgröße z.B. eines elektrischen Antriebs, der die Schere 6 und den Anschlag 85 voneinander beabstandet. Die Umrechnung findet dabei ohne Kenngrößen der Beschlags-Baueinheiten statt, so dass hier keine Aktualisierung notwendig wird, wenn sich die Beschlagsbaueinheiten ändern. Die von der Vorrichtung (Montagetisch 1) unabhängige Einrichtung ist dann vorteilhaft, wenn die Mittel zum Durchtrennen bzw. Ablängen der Beschlags-Baueinheiten von der Einrichtung entfernt angebracht werden sollen.

Durch dieses Ausführungsbeispiel wird deutlich, dass die Bohrungen 35 in dem Lineal 34 einen Abstand 86 zueinander aufweisen, der exakt der Länge des Ablängsbereiches 57' der Beschlags-Baueinheiten 48, 49 entspricht.

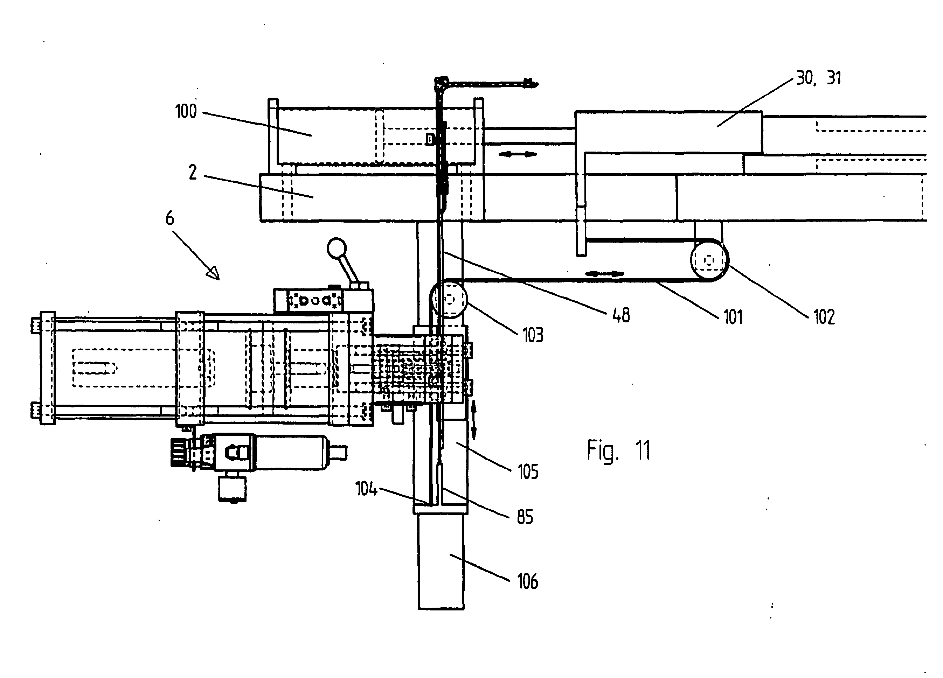

In der Fig. 11 ist in einer detaillierteren Ansicht ein Ausschnitt des Montagetisches 1 dargestellt. Hierin ist die Tischplatte 2 erkennbar, oberhalb der der Ansatz 30 bzw. Anschlag 31 über einen Stellantrieb 100 bewegt werden kann. Der Stellantrieb ist als pneumatischer Spannzylinder ausgelegt, der den Ansatz 30 und damit den Anschlag 31 bewegt und von der Bedienperson gehandhabt wird. an dem Ansatz 30 bzw. Anschlag 31 ist ein flexibles, aber in Zug- und Druckrichtung starres Band 101 befestigt. Das Band 101 ist über eine Umlenkvorrichtung bestehend aus zwei Umlenkrollen 102, 103 so geführt, dass das Ende 104 in lotrechter Richtung verläuft. Das Ende 104 ist an einem Schieber 105 befestigt, der an einer Führung 106 ebenfalls lotrecht verschiebar gelagert ist. Dadurch wird bei einer Bewegung des Ansatzes 30 der Schieber 105 im gleichen Maße mitgeführt, allerdings in einer senkrechten Richtung dazu. An dem Schieber 105 ist der Anschlag 85 zur Anlage der Beschlags-Baueinheiten (hier Beschlags-Baueinheit 48) angebracht. Die Schere 6 ist so befestigt, dass die Beschlags-Baueinheiten in lotrechter Richtung eingeführt und abgelängt werden können. Dies erleichtert die Handhabung der Beschlags-Baueinheiten, da diese bei größeren Längen zunehmend unhandlich werden und dann oft durchbiegen. Bei einem lotrechten Einführen ist dies nicht zu befürchten.
Dies wird insbesondere dadurch begünstigt, dass die erforderlichen Stellgrößen durch die Ermittlung des Abfalls vergleichsweise gering sind.

Daneben bringt die lotrechte Anordnung erhebliche Vorteile beim Handling, da die Bedienperson die Beschlags-Baueinheiten 47, 48, 49 üblicherweise einem oberhalb des Montagetisches 1 angeordneten Magazin entnimmt und diese beim herabführen direkt in die Schere 6 einführen kann.

Letztlich liegt ein entscheidender Vorteil in dem Verfahren, welches durch die Vorrichtung 1 möglich ist. Das Verfahren zur Bestimmung des überflüssigen Maßes und daher abzuschneidenden Anteils (Trennabschnitte 66) einer Beschlags-Baueinheit 48, 49 eines Treibstangenbeschlages 45 der vorstehend näher beschriebenen Art erfolgt mit einer Vorrichtung (Montagetisch 1) dadurch, dass, der Flügelrahmen 41 zunächst durch den beweglichen Anschlags 31 und einem wirksamen Gegenlager GL lagefixiert wird. Neben dem wirksamen Gegenlager GL sind dabei an der Vorrichtung 1 weitere unwirksame Gegenlager starr jeweils im Abstand des Ablängbereichs 57' zueinander und zu dem beweglichen Anschlag 31 in einer Ausgangslage angebracht und beabstandet. Der Flügelrahmen 41wird an dem Anschlag 31 in der Ausgangslage angelegt, in der dieser maximal zurückgezogen ist. Das entsprechende Gegenlager GL wird durch Wirksammachung des ersten bezogen auf einen Bezugspunkt des Flügelrahmens 41 in Bewegungsrichtung des beweglichen Anschlags 31 freien Gegenlagers GL bestimmt. Der Bezugspunkt kann dabei eine äußere Flügelkante oder aber die Ausnehmungen 51 sein.

Alternativ kann dabei ein Mittel zum Durchtrennen 6 der Beschlags-Baueinheiten 47,48 zusammen mit dem Anschlag 31 verfahren werden wobei der Anschlag 85 an der Vorrichtung 1 ortsfest angebunden bzw. angebracht ist, oder der Anschlag 85 wird zusammen mit dem Anschlag 31 verfahren und das Mittel zum Durchtrennen 6 ist an der Vorrichtung 1 ortsfest angebunden. Dadurch ergibt sich zwischen dem Mittel zum Durchtrennen 6 und dem Anschlag 85 das Maß, um welches die Beschlags-Baueinheit 47 oder 48 gekürzt werden soll.

### Bezugszeichenliste

- 1: Montagetisch
- 2: Tischplatte
- 3: Trägergestell
- 4: Einrichtung
- 5: Drehpunkt
- 6: Schere
- 8: Scherenmaul
- 9: Vorderkante
- 10: Führungsschiene
- 11: Träger
- 12: Schrauber
- 13: Rahmen
- 14: Seite
- 15: Seite
- 16: Verbindungsstrebe
- 17: Verbindungsstrebe
- 18: Verbindungsstrebe
- 19: Seite
- 20: Seite
- 21: Querstrebe
- 30: Ansatz
- 31: Anschlag
- 32: Doppelpfeil
- 33: Lineal
- 35: Bohrungen
- 41: Flügelrahmen
- 42a: Profilholm
- 42b: Profilholm
- 42c: Profilholm
- 42d: Profilholm
- 43a: Eckverbindung
- 43b: Eckverbindung
- 43c: Eckverbindung
- 43d: Eckverbindung
- 44a: Flügelfalzhöhe
- 44b: Flügelfalzbreite
- 45: Treibstangenbeschlag
- 46: Falzumfangsfläche
- 47: Beschlags-Baueinheit/ Antriebs-Baueinheit
- 48: Beschlags-Baueinheit/ Eckbeschlags-Baueinheit
- 49: Beschlags-Baueinheit/ Eckbeschlags-Baueinheit
- 50: Stellantrieb
- 51: Ausnehmungen
- 52: Treibstange
- 53: Treibstange
- 54: Treibstange
- 55: Kupplungselement-Paarung
- 56: Kupplungselement/ kurz
- 57: Kupplungselement/ lang
- 57': Ablängbereich
- 58: Nennmaß
- 59a/ 59b: Sitz des Stellantriebs 50
- 60a: Einbaulänge
- 60b: Einbaulänge
- 61: Stulpschiene
- 62: Stulpschiene
- 63: Stulpschiene
- 64: Formschlußeingriffs-Länge
- 65: Scheren-Symbol
- 66: Trennabschnitte
- 67: Versetztlage
- 68: Pfeilrichtung
- 69: Pfeilrichtung
- 70: Abkröpfungsabschnitt
- 71: Durchgangsloch
- 72: Durchgangsloch
- 80: Skala
- 81: Skala
- 82: Skala
- 83: Bereich
- 85: Anschlag
- 86: Abstand

- G1 bis G5: Griffsitzposition
- GL: Gegenlager

## Patentansprüche

1. Vorrichtung (1) zum Montieren eines Treibstangenbeschlages an einen Flügelrahmen (41) oder Rahmen eines Fensters oder einer Tür, wobei der Treibstangenbeschlag (45) aus mehreren Beschlags-Baueinheiten (47, 48, 49) zusammengesetzt ist, die über eine Kupplungselementen-Paarung (55) miteinander antriebsverbunden sind, wobei zumindest eine der Beschlags-Baueinheiten (48, 49) an einem Ablängbereich (57') längenanpassbar ist und das daran anzukoppelnde Beschlags-Baueinheiten (47) ein starres und nicht längenanpassbares Kopplungsglied (56) aufweist, wobei die Vorrichtung Mittel zum Durchtrennen der Beschlags-Baueinheiten (48, 49) an dem Ablängbereich (57') oder Mittel zur Maßermittlung der notwendigen Abmessung der Beschlags-Baueinheiten (48, 49) aufweist, welche in Abhängigkeit von den Abmessungen des Flügelrahmens (41) oder des Rahmens **dadurch** eingestellt sind, dass der Flügelrahmen (41) oder Rahmen an der Vorrichtung (1) durch zumindest einen beweglichen Anschlag (31) sowie einem wirksamen Gegenlager (GL) fixiert ist,
**gekennzeichnet durch** dem beweglichen Anschlag (31) zugeordnete und an der Vorrichtung (1) angebrachte starre Gegenlager (GL), welche jeweils im Abstand des Ablängbereichs (57') zueinander und maximal zu dem beweglichen Anschlag (31) beabstandet sind und abhängig von der Flügelgröße (44a, 44b) wirksam bzw. unwirksam sind, wobei entweder an dem Anschlag (31) das Mittel zum Durchtrennen (6) bzw. das Mittel zur Maßermittlung mitgeführt ist und ein starrer Anschlag (85) für die Beschlags-Baueinheiten (48, 49) an der Vorrichtung (1) ortsfest angebracht ist, oder an dem Anschlag (31) der Anschlag (85) für die Beschlags-Baueinheiten (48, 49) mitgeführt ist, während das Mittel zum Durchtrennen (6) bzw. das Mittel zur Maßermittlung an der Vorrichtung (1) ortsfest angebracht ist.

2. Vorrichtung nach Anspruch 1, **dadurch gekennzeichnet, dass** die Gegenlager (GL) aus Zapfen bestehen, welche zur Wirksammachung in entsprechende Ausnehmungen oder Bohrungen (35) der Vorrichtung (1) einführbar sind.

3. Vorrichtung nach Anspruch 1 oder 2, **dadurch gekennzeichnet,**
**dass** die Gegenlager (GL) aus quer zur Bewegungsrichtung des Anschlags (31) beweglichen Schwenkanschlägen bestehen.

4. Vorrichtung nach mindestens einem der Ansprüche 1 bis 3, **dadurch gekennzeichnet, dass** das Mittel zum Durchtrennen der Beschlags-Baueinheiten (48, 49) eine Stanze oder Schere (6) ist.

5. Vorrichtung nach mindestens einem der Ansprüche 1 bis 4, **dadurch gekennzeichnet, dass** zumindest ein Gegenlager (GL) so geformt ist, dass das Gegenlager (GL) in einer Bohrung oder Ausnehmung (51) des Flügelrahmens (41) zur Anbringung des Betätigungsgriffs aufgenommen werden kann.

6. Vorrichtung nach mindestens einem der Ansprüche 1 bis 5, **dadurch gekennzeichnet, dass** die Bewegung des Anschlages (31) oder des Mittels zum Durchtrennen (6) der Beschlags-Baueinheiten (48, 49) in einer annähernd lotrechte Richtung erfolgt.

7. Vorrichtung nach Anspruch 6, **dadurch gekennzeichnet, dass** an dem beweglichen Anschlag (31) eine Umlenkvorrichtung angebracht ist, welche den Anschlag (85) oder das Mittel zum Durchtrennen (6) und den beweglichen Anschlag (31) antriebsverbindet.

8. Verfahren zur Bestimmung des überflüssigen Maßes einer Beschlags-Baueinheit (48, 49) eines Treibstangenbeschlages (45) für ein Fenster, eine Tür oder dgl.,
wobei der Treibstangenbeschlag (45) aus zumindest zwei Beschlags-Baueinheiten (47, 48) besteht und eine Beschlags-Baueinheit (48) einen ablängbaren Bereich (57') aufweist, der mit einem nicht ablängbaren Kupplungselement (56) einer angrenzenden Beschlags-Baueinheit (47) gekoppelt wird, mit einer Vorrichtung (1), an der mittels zumindest eines aus einer Ausgangslage beweglichen Anschlags (31) und einem wirksamen Gegenlager (GL) der Flügelrahmen (41) lagefixiert wird, wobei an der Vorrichtung (1) neben dem wirksamen Gegenlager (GL) weitere unwirksame Gegenlager starr jeweils im Abstand des Ablängbereichs (57') zueinander und zu dem beweglichen Anschlag (31) in einer Ausgangslage angebracht und beabstandet sind,
wobei der Flügelrahmen (41) an dem Anschlag (31) in der Ausgangslage angelegt und das entsprechende wirksame Gegenlager (GL) durch Wirksammachung des ersten bezogen auf einen Bezugspunkt des Flügelrahmens (41) in Bewegungsrichtung des beweglichen Anschlags (31) freien Gegenlagers (GL) bestimmt wird,
wobei ein Mittel zum Durchtrennen (6) der Beschlags-Baueinheiten (47,48) zusammen mit dem Anschlag (31) verfahren wird und ein Anschlag (85) an der Vorrichtung (1) angebunden ist oder der Anschlag (85) zusammen mit dem Anschlag (31) verfahren wird und das Mittel zum Durchtrennen (6) an der Vorrichtung (1) angebunden ist, wodurch sich zwischen dem Mittel zum Durchtrennen (6) und dem Anschlag (85) das Maß ergibt, um welches die Beschlags-Baueinheit (47 oder 48)gekürzt werden soll.

## Claims

1. Device (1) for installing a driving-rod fitting on a casement/leaf frame (41) or frame of a window or of a door, it being the case that the driving-rod fitting (45) is made up of a plurality of fitting units (47, 48, 49) which are drive-connected to one another via a coupling-element pairing (55), that at least one of the fitting units (48, 49) is length-adaptable at a cut-to-length region (57'), and the fitting unit (47) which can be coupled thereto has a rigid coupling member (56) which is not length-adaptable, and that the device has means for cutting through the fitting units (48, 49) at the cut-to-length region (57') or means for measuring the necessary dimensions of the fitting units (48, 49), these being set in dependence on the dimensions of the casement/leaf frame (41) or of the frame in that the casement/leaf frame (41) or frame is fixed on the device (1) by at least one movable stop (31) and an operative abutment (GL), **characterized by** rigid abutments (GL) which are assigned to the movable stop (31), are fitted on the device (1), are spaced apart from one another in each case by the spacing of the cut-to-length region (57') and to the maximum extent from the movable stop (31) and, depending on the casement/leaf size (44a, 44b), are operative or inoperative, it being the case that the means for cutting purposes (6) or the means for measuring purposes is carried along on the stop (31) and a rigid stop (85) for the fitting units (48, 49) is mounted in a stationary manner on the device (1), or the stop (85) for the fitting units (48, 49) is carried along on the stop (31), while the means for cutting purposes (6) or the means for measuring purposes is mounted in a stationary manner on the device (1).

2. Device according to Claim 1, **characterized in that** the abutments (GL) comprise pins which, in order to be rendered operative, can be introduced into corresponding recesses or bores (35) of the device (1).

3. Device according to Claim 1 or 2, **characterized in that** the abutments (GL) comprise pivoting stops which can be moved transversely to the movement direction of the stop (31).

4. Device according to at least one of Claims 1 to 3, **characterized in that** the means for cutting through the fitting units (48, 49) is a punching means or a set of shears (6).

5. Device according to at least one of Claims 1 to 4, **characterized in that** at least one abutment (GL) is formed such that the abutment (GL) can be accommodated in a bore or recess (51) of the casement/leaf frame (41) for mounting the actuating handle.

6. Device according to at least one of Claims 1 to 5, **characterized in that** the movement of the stop (31) or of the means for cutting through (6) the fitting units (48, 49) takes place in a more or less vertical direction.

7. Device according to Claim 6, **characterized in that** a deflecting device is mounted on the movable stop (31), this deflecting device drive-connecting the stop (85) or the means for cutting purposes (6) and the movable stop (31).

8. Method of determining the oversize of a fitting unit (48, 49) of a driving-rod fitting (45) for a window, a door or the like, it being the case that the driving-rod fitting (45) comprises at least two fitting units (47, 48), and one fitting unit (48) has a cut-to-length region (57') which is coupled to a coupling element (56) which cannot be cut to length and belongs to an adjacent fitting unit (47), having a device (1) on which the casement/leaf frame (41) is fixed in position by means of at least one stop (31), which can be moved out of a starting position, and an operative abutment (GL), that, alongside the operative abutments (GL), further inoperative abutments are mounted rigidly on the device (1) and spaced apart from one another, and from the movable stop (31) in a starting position, in each case by the spacing of the cut-to-length region (57'),
that the casement/leaf frame (41) is placed against the stop (31) in the starting position and the appropriate operative abutment (GL) is determined by rendering operative the first free abutment (GL) in the movement direction of the movable stop (31), in relation to a reference point of the casement/leaf frame (41), and
that a means for cutting through (6) the fitting units (47, 48) is displaced together with the stop (31) and a stop (85) is attached to the device (1), or the stop (85) is displaced together with the stop (31) and the means for cutting purposes (6) is attached to the device (1), the amount by which the fitting unit (47 or 48) is to be shortened being obtained between the means for cutting purposes (6) and the stop (85).

## Revendications

1. Dispositif (1) pour le montage d'une ferrure à crémone sur le cadre (41) d'un ouvrant ou le cadre d'une fenêtre ou d'une porte, la ferrure de crémone (45) étant constituée de l'assemblage de plusieurs composants de ferrure (47, 48, 49) qui sont reliés à entraînement mutuel par une paire d'éléments d'accouplement (55), au moins l'un des éléments de ferrure (48, 49) pouvant être adapté en longueur sur une zone (57') de découpe à longueur et l'élément de ferrure (47) qui doit y être accouplé présentant un organe d'accouplement (56) rigide et de longueur non modifiable, le dispositif présentant des moyens de découpe des unités de ferrure (48, 49) dans la zone (57') de découpe à longueur ou des moyens de détermination de la dimension nécessaire des éléments de ferrure (48, 49) qui sont réglés en fonction des dimensions du cadre d'ouvrant (41) ou du cadre en fixant le cadre d'ouvrant (41) ou le cadre sur le dispositif (1) par au moins une butée mobile (31) ainsi que par un contre-appui (GL) actif, **caractérisé par** des contre-appuis (GL) rigides associés à la butée mobile (31), installés sur le dispositif (1) et disposés l'un par rapport à l'autre à la distance de la zone (57') de découpe à longueur et au maximum de la butée mobile (31) et sont rendus actifs ou inactifs en fonction de la taille de l'ouvrant (44a, 44b), le moyen de découpe (6) ou le moyen de détermination de la dimension étant entraînés sur la butée (31) et une butée rigide (85) pour les éléments de ferrure (48, 49) étant installé fixement sur le dispositif (1), ou la butée (85) prévue pour les éléments de ferrure (48, 49) est entraînée sur la butée (31), tandis que le moyen de découpe (6) ou le moyen de détermination de la dimension sont installés fixement sur le dispositif (1).

2. Dispositif selon la revendication 1, **caractérisé en ce que** les contre-appuis (GL) sont constitués de tourillons qui peuvent être insérés dans des découpes ou des alésages correspondants (35) du dispositif (1) pour être rendus actifs.

3. Dispositif selon les revendications 1 ou 2, **caractérisé en ce que** les contre-appuis (GL) sont constitués de butées pivotantes mobiles transversalement par rapport à la direction de déplacement de la butée (31).

4. Dispositif selon au moins l'une des revendications 1 à 3, **caractérisé en ce que** le moyen de découpe des éléments de butée (48, 49) est un poinçon ou une cisaille (6).

5. Dispositif selon au moins l'une des revendications 1 à 4, **caractérisé en ce qu'**au moins un contre-appui (GL) est configuré de telle sorte que le contre-appui (GL) puisse être reçu dans un alésage ou une découpe (51) du cadre d'ouvrant (41) pour installer la poignée d'actionnement.

6. Dispositif selon au moins l'une des revendications 1 à 5, **caractérisé en ce que** le déplacement de la butée (31) ou du moyen de découpe (6) des éléments de butée (48, 49) s'effectue dans une direction sensiblement verticale.

7. Dispositif selon la revendication 6, **caractérisé en ce qu'**un dispositif de renvoi qui relie à entraînement la butée (85) ou le moyen de découpe (6) et la butée mobile (31) est installée sur la butée mobile (31).

8. Procédé de détermination de la longueur en excès d'un élément de ferrure (48, 49) d'une ferrure à crémone (45) pour une fenêtre, une porte ou similaires,
dans lequel la ferrure à crémone (45) est constituée d'au moins deux éléments de ferrure (47, 48), un élément de ferrure (48) présentant une zone (57') de découpe à longueur accouplée à un élément d'accouplement (56) d'un élément contigu de ferrure (47) qui ne peut être découpé à longueur à l'aide d'un dispositif (1) sur lequel le cadre d'ouvrant (41) peut être immobilisé au moyen d'une butée (31) qui peut être sortie d'une position initiale et d'un contre-appui actif (GL), tandis qu'en plus du contre-appui actif (GL), d'autres contre-appuis non actifs sont installés rigidement sur le dispositif (1) à distance les uns des autres dans une position de départ située à distance de la zone (57') de découpe à longueur et de la butée mobile (31),
le cadre d'ouvrant (41) étant placé sur la butée (31) dans la position initiale et le contre-appui (GL) actif correspondant étant défini en rendant actif le premier contre-appui libre (GL) par rapport à un point de référence du cadre d'ouvrant (41) dans la direction du déplacement de la butée mobile (31),
un moyen de découpe (6) des éléments de ferrure (47, 48) étant déplacé en même temps que la butée (31), une butée (85) étant reliée au dispositif (1) ou la butée (85) étant déplacée en même temps que la butée (31) et le moyen de découpe (6) étant relié au dispositif (1), grâce à quoi on obtient entre le moyen de découpe (6) et la butée (85) la dimension de laquelle l'unité de ferrure (47 ou 48) doit être raccourcie.
